# FASCICULE DE BREVET EUROPEEN

(11) **EP 1 788 177 B1**
(45) Date de publication et mention de la délivrance du brevet: **06.05.2009**
(21) Numéro de dépôt: 06301151.4
(22) Date de dépôt: 16.11.2006
(51) Int. Cl.: E05D 15/10

(54) **Véhicule comprenant une porte latérale coulissante montée sur le véhicule par l'intermédiaire d'un bras de déhanchement**
Fahrzeug mit einer verschiebbaren Seitentür, die mit dem Fahrzeug über einen Schwenkarm verbunden ist
Vehicle with a sliding side door connected to the vehicle through a swivelling arm

(30) Priorité: 22.11.2005 FR 0511820
(43) Date de publication de la demande: 23.05.2007
(73) Titulaire: PEUGEOT CITROËN AUTOMOBILES SA, 78140 Vélizy Villacoublay (FR)
(72) Inventeur: Guinois, Pascal, 91680, Bruyères Le Chatel (FR)
(74) Mandataire: Gendraud, Pierre

(56) Documents cités:
- GB-A- 738 486
- US-A- 4 135 760
- US-B1- 6 183 039

## Description

La présente invention concerne un véhicule automobile selon le préambule de la revendication 1.

Le document US -B1- 6 183 039 décrit un véhicule automobile du type précité, comprenant deux chariots coulissant dans le même rail, associés à deux bras de déhanchement parallèles. Ce mécanisme en pantographe provoque une translation transversale de la porte lors du pivotement des bras.

Néanmoins, un tel mécanisme en pantographe impose un mouvement particulier de la porte et est inapproprié pour imposer des mouvements cinématiques différents à la porte.

Un but de l'invention est de fournir un véhicule automobile comprenant une porte coulissante portée par un bras de déhanchement et dont le mouvement cinématique puisse facilement être adapté.

A cet effet, l'invention propose un véhicule automobile du type précité, caractérisé en ce que la rainure comprend au moins un tronçon d'entrée parallèle à la direction de coulissement de la porte, et un tronçon de déhanchement prolongeant le tronçon d'entrée et s'étendant dans une direction générale transversale à la direction de coulissement de la porte.

Selon d'autres modes de réalisation, le véhicule automobile comprend une ou plusieurs des caractéristiques suivantes, prise(s) isolément ou selon toutes les combinaisons techniquement possibles :
- ;
- l'ensemble de guidage et de support a son chariot monté à rotation sur le bras de déhanchement autour d'un axe parallèle à l'axe de rotation du bras de déhanchement ;
- en position fermée de la porte, le galet (l'élément) est décalé vers l'extérieur de la structure par rapport à un plan passant par l'axe de rotation du bras de déhanchement par rapport à la structure et par l'axe de rotation du chariot par rapport au bras de déhanchement ;
- le véhicule automobile comprend un dispositif d'immobilisation débrayable du bras de déhanchement en position déployée, le galet s'engageant dans la rainure lorsque le dispositif d'immobilisation est débrayé et que le bras pivote, et se dégageant de la rainure au cours du coulissement de la porte, une fois que le dispositif d'immobilisation est actif ;
- le dispositif d'immobilisation comprend une butée de limitation de la rotation du bras de déhanchement à l'ouverture ;
- le dispositif d'immobilisation comprend une butée de cliquet solidaire de la structure, un cliquet monté à rotation sur le bras de déhanchement, comprenant une première extrémité constituant un embout de blocage et une deuxième extrémité constituant un talon d'appui de part et d'autre de l'axe de rotation du cliquet, et un organe de libération solidaire de la porte, de façon que, en position déployée du bras de déhanchement, l'embout de blocage est en prise avec la butée pour empêcher un retour du bras de déhanchement vers la position rabattue, et que lors de la fermeture de la porte, l'organe de libération appui contre le talon d'appui pour dégager le cliquet de la butée et libérer le bras de déhanchement en rotation vers sa position rabattue ;
- le cliquet en position verrouillée, c'est à dire, avec l'embout de blocage en prise avec la butée, est sollicité en traction par un mouvement du bras de déhanchement de la position déployée vers la position rabattue ; et
- le cliquet en position verrouillée, c'est à dire, avec l'embout de blocage en prise avec la butée, est arc-bouté entre le bras de déhanchement et la butée de cliquet.

L'invention et ses avantages seront mieux compris à la lecture de la description qui va suivre, donnée uniquement à titre d'exemple, et faite en se référant aux dessins annexés, sur lesquels :
- les figures 1 et 2 sont des vues latérales schématiques d'un véhicule automobile conforme à l'invention, comprenant une porte latérale coulissante illustrée en position respectivement fermée et ouverte ;
- la figure 3 est une vue en coupe selon III-III du véhicule de la figure 1, illustrant un ensemble de guidage et de support dont le rail est fixé sur la structure du véhicule automobile ;
- la figure 4 est une vue de dessus de l'ensemble de guidage et de support de la figure 3 ;
- la figure 5 est une vue en coupe selon V-V du véhicule automobile de la figure 1, illustrant des ensembles de guidage et de support dont les rails sont fixés sur la porte ;
- les figures 6A à 6D sont des vues de dessus d'un ensemble de guidage et de support inférieur de la figure 5, dans différentes positions ;
- les figures 7A à 7D sont des vues de dessus d'un dispositif de guidage de la porte actif en début d'ouverture et en fin de fermeture de la porte, dans différentes positions ; et
- les figures 8A à 8D sont des vues analogues à celles des figures 6A à 6D, et illustrent un ensemble de guidage et de support selon une variante de l'invention, dans différentes positions.

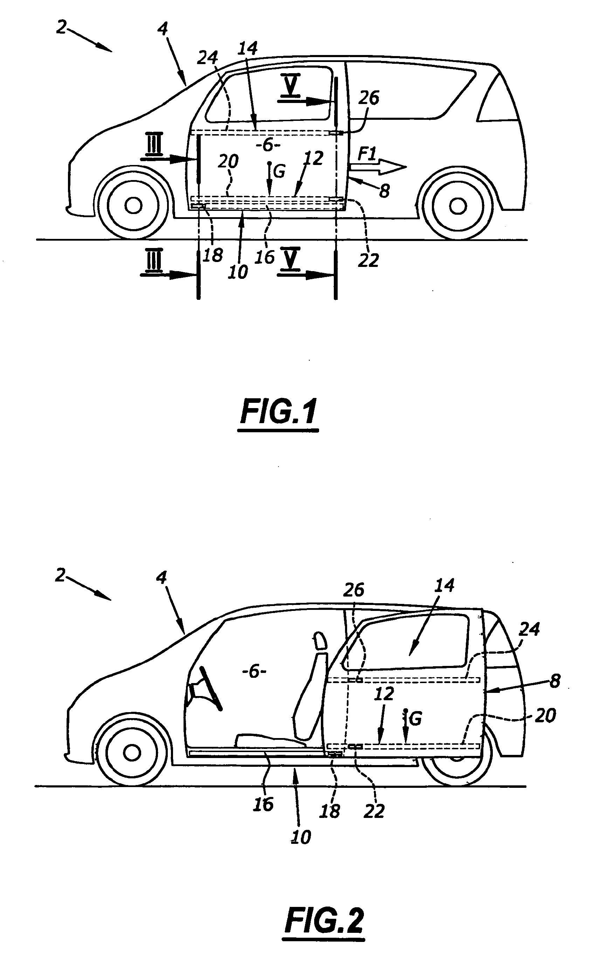

Tel qu'illustré sur la figure 1, le véhicule automobile 2 comprend une structure 4 comprenant une ouverture latérale 6 permettant d'accéder à l'intérieur du véhicule 2, et une porte latérale 8.

La porte 8 est montée coulissante sur la structure 4 entre une position fermée (figure 1) dans laquelle la porte 8 obture l'ouverture 6, et une position ouverte (figure 2) dans laquelle la porte 8 est dégagée de l'ouverture 6 pour libérer l'accès à l'intérieur du véhicule 2.

Lors de son ouverture, la porte 8 se déplace séquentiellement dans une premier temps transversalement vers l'extérieur du véhicule, i.e. perpendiculairement au plan des figures 1 et 2, afin que la porte 8 sorte de l'ouverture 6, et dans un deuxième temps longitudinalement vers l'arrière comme illustré par la flèche F1 (figure 1) pour décaler la porte 8 de l'ouverture 6. Le déplacement transversal de la porte est nommé « mouvement de déhanchement ».

La porte 8 est montée sur la structure 4 par l'intermédiaire de trois ensembles de guidage et de support 10, 12 et 14.

L'ensemble 10 comprend un rail 16 fixé horizontalement sur la structure 4 le long d'un bord inférieur de l'ouverture 6, et un chariot 18 monté sur la porte 8 à proximité d'un coin inférieur avant de la porte 8 et monté coulissant le long du rail 16.

L'ensemble 12 comprend un rail 20 fixé horizontalement le long d'un bord inférieur de la porte 8, et un chariot 22 monté sur la structure 4 à proximité d'un bord arrière de l'ouverture 6 et coulissant le long du rail 20.

L'ensemble 14 comprend un rail 24 fixé horizontalement sensiblement à mi-hauteur de la porte 8, et un chariot 26 monté sur la structure 4 à proximité d'un bord arrière de l'ouverture 6 et coulissant le long du rail 24.

Lors du mouvement longitudinal de la porte 8, le chariot 18 coulisse le long du rail 16, et les chariots 22 et 26 sont sensiblement immobiles par rapport à la structure 4.

Au début de l'ouverture (figure 1), le chariot 18 est écarté des chariots 22 et 26. Ainsi, la porte 8 repose sur des points d'appuis écartés, ce qui permet un appui stable de la porte 8, évitant les vibrations et les bruits. Le guidage de la porte 8 est donc amélioré.

Au cours de l'ouverture, le chariot 18 se rapproche longitudinalement des chariots 22 et 26.

Par ailleurs, le rail 16 est masqué par la porte 8 lorsque celle-ci est fermée, et les rails 20 et 24 ne sont pas visibles depuis l'extérieur du véhicule 2. L'agencement des ensembles 10, 12 et 14 permet donc de préserver l'aspect extérieur du véhicule 2.

Comme cela sera décrit plus précisément par la suite, l'ensemble 14 assure principalement un guidage transversal de la porte 8, alors que les ensemble 10 et 12 sont des ensembles porteurs supportant le poids de la porte 8 et assurant son guidage transversal.

Les sollicitations verticales des ensembles 10 et 12 varient en fonction de la position du centre G de gravité de la porte 8 par rapport au chariot 22.

Lorsque le centre G est situé à l'avant du chariot 22 (figure 1), le rail 20 est sollicité en appui vers le bas sur le chariot 22, et le chariot 18 est sollicité vers le bas en appui sur le rail 16.

Lorsque le centre G est situé à l'arrière du chariot 22 (figure 2), la porte 8 a tendance à basculer vers l'arrière, et le rail 20 est sollicité en appui vers le bas sur le chariot 22, et le chariot 18 est sollicité en appui vers le haut sur le rail 16.

Par conséquent, le chariot 22 est principalement sollicité vers le haut relativement au rail 20, et le chariot 18 est sollicité vers le haut ou le bas relativement au rail 16.

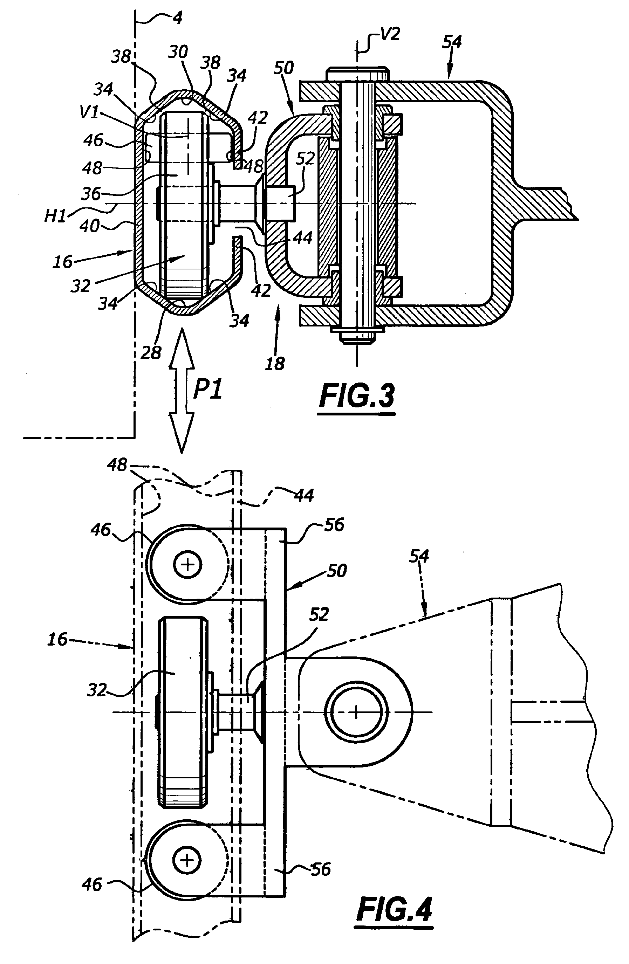

Tel que représenté sur la figure 3, le rail 16 comprend une piste de roulement inférieure 28 et une piste de roulement supérieure 30 disposées en vis-à-vis.

Le chariot 18 comprend un galet porteur 32 monté à rotation sur le chariot 18 autour d'un axe horizontal H1 et sollicité par le poids de la porte 8 en appui selon une direction verticale P1, vers le bas contre la piste 28, comme illustré sur la figure 3, ou vers le haut contre la piste 30.

Chaque piste 28, 30 présente une section transversale en V ouverte vers l'autre piste 28, 30 et délimitée par deux surfaces latérales 34 inclinées l'une par rapport à l'autre et par rapport à la direction P1, et orientée l'une vers l'autre.

Le galet 32 comprend un corps sensiblement cylindrique 36 d'axe H1 comprenant à chacune de ses extrémités axiales des chanfreins 38 constituant des surfaces de roulement.

Lorsque le galet 32 est sollicité contre une piste 28, 30, chaque surface 38 vient en appui sur une surface 34 respective de la piste 28, 30 considérée.

Du fait de leur inclinaison, chaque surface 34 repousse le galet 32 vers le centre du rail 16. Il en résulte que le jeu latéral du galet 32 par rapport au rail 16 est nul ou quasi nul, et que le guidage latéral du chariot 18 est amélioré.

Par conséquent le guidage de la porte 8 est amélioré.

La distance entre les pistes 28 et 30, d'une part, et le diamètre du galet 32, d'autre part, sont tels que le galet 32 est en appui sélectivement sur la piste 28 ou la piste 30, le jeu subsistant entre les surfaces 38 et les surfaces 34 de l'autre piste étant faible, par exemple de l'ordre 0,3 mm à 0,9 mm.

Les pistes 28 et 30 sont reliées par une âme centrale 40 fixée sur la structure 4.

Des rebords verticaux 42 prolongent les pistes 28, 30 du côté opposé à l'âme 40, et une ouverture latérale 44 du rail 16 est délimitée entre les extrémités libres des rebords 42.

Le chariot 18 porte des galets 46 de guidage latéral du chariot 18 par rapport au rail 16, par exemple au nombre de deux, un seul étant visible sur la figure 3. Chaque galet 46 est monté à rotation sur le chariot 18 autour d'un axe vertical V1, et est susceptible de venir en appui latéral sur des pistes de guidage 48 formées sur des surfaces internes verticales opposées de l'âme 40 et d'un rebord 42 supérieur.

Le chariot 18 comprend une base 50, et une broche 52 fixée sur la base 50 traversant l'ouverture 44 et portant à son extrémité libre le galet 32.

La base 50 est fixée pivotante autour d'un axe vertical V2 sur une bride 54, elle-même fixée sur la porte 8.

Comme on peut mieux le voir sur la figure 4, les galets 46 sont disposés devant et derrière le galet porteur 32 le long du rail 16, en étant montés pivotants sur des branches 56 de la base 50 en saillie à l'intérieur du rail 16 par l'ouverture 44.

Les galets 46 fournissent un guidage latéral complémentaire. Du fait du guidage latéral amélioré du galet 32, il est possible de prévoir des jeux latéraux réduits entre chaque galet 46 et les pistes 40 et 48. Ainsi dans les parties droites des pistes 40, le jeu pourra être réduit au minimum, le rail ayant de bonnes qualité géométriques, et dans les parties courbes des pistes 48, ou la qualité géométrique dépens de la technologie de cintrage et de la valeur de cintrage, le jeu pourra être établi en fonction des tolérances relatives.

La réduction des jeux améliore la qualité perçue par l'utilisateur.

Pour permettre le mouvement de déhanchement de la porte 8, le rail 16 comprend une portion d'extrémité avant courbe (non représentée) rentrant vers l'intérieur de la structure 4, pour provoquer le déplacement transversal de la partie avant de la porte 8.

Les galets 46 agissent dans la portion d'extrémité courbe du rail 16 pour guider le chariot 18.

En variante, le chariot 18 comprend un seul galet 46, disposé devant ou derrière le galet 32.

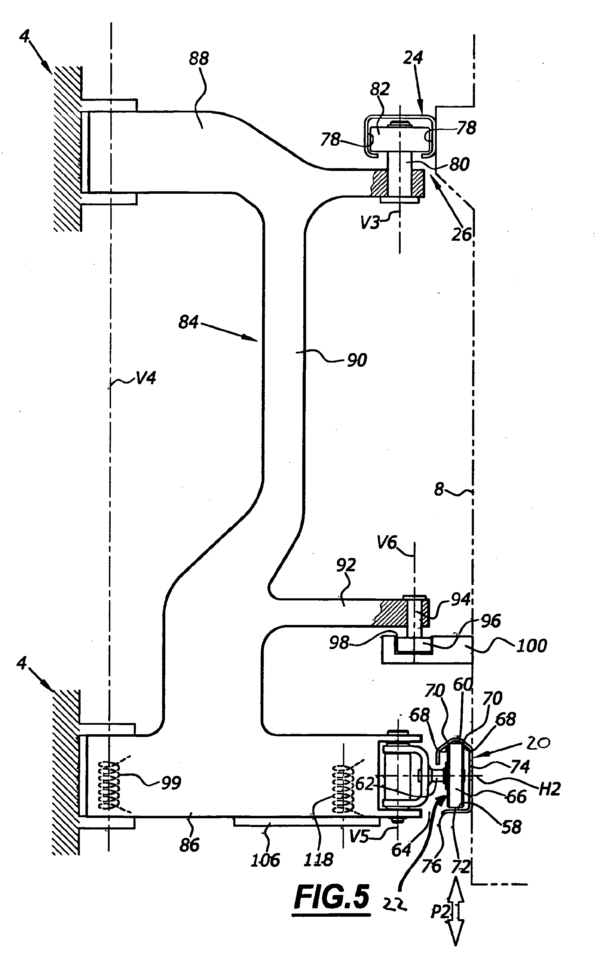

Tel que représenté sur la figure 5, le rail 20 comprend des pistes inférieure 58 et supérieure 60 disposées en regard l'une de l'autre, et s'étendant le long du rail 20.

Le chariot 22 comprend une broche 62 s'étendant en saillie dans le rail 20 à travers une ouverture latérale 64 du rail 20, et portant un galet 66 monté à rotation autour d'un axe horizontale H2 sur la broche 62 et destiné à venir en appui sur la piste 58 ou la piste 60 verticalement selon une direction P2.

La piste 58 est sensiblement plane et horizontale.

La piste 60 présente une section transversale en V ouvert vers la piste 58, définie par deux surfaces latérales 68 inclinées l'une par rapport à l'autre et par rapport à la direction P2, et orientées l'une vers l'autre. La piste 60 constitue une piste de roulement pour le galet 66.

Le galet 66 comprend un corps cylindrique d'axe H2 muni de deux chanfreins 70 définissant des surfaces de roulement chacune en appui sur une surface 68 respective lorsque le galet 66 est sollicité contre la piste 60, et une surface externe périphérique cylindrique 72 en appui sur la piste 58 lorsque le galet 66 est sollicité contre cette piste 58.

Comme cela a été décrit précédemment, le galet 66 est sollicité en appui sur le rail 20 principalement vers le haut, c'est-à-dire contre la piste 60. Dans ce cas, le guidage du galet 66 est amélioré de la même façon que dans l'ensemble 10 (figure 3).

La distance entre les pistes 58 et 60, d'une part, et le diamètre du galet 66, d'autre part, sont tels que le jeu entre la surface 72 et la piste 58 est d'environ 1,5 mm à 2 mm.

En fonctionnement, le galet 66 est en contact de façon exceptionnelle avec la piste 58, qui permet une limitation verticale de jeu de la porte 8 lors d'une accélération verticale inhabituelle (roulage porte ouverte sur route mauvaise, lors de l'assemblage de la porte sur la caisse, en cas d'accident).

Le rail 20 comprend une âme 74 reliant les pistes 58 et 60, fixée sur la porte 8. Du côté opposé à l'âme 74, la piste 58 se prolonge par un rebord 76 replié vers le bas.

La piste 58 plane et le rebord 76 permettent d'éviter l'accumulation de saletés au fond du rail 20, de façon à préserver la propreté du véhicule 2.

Le rail 24 présente une section transversale en U ouverte vers le bas. Le rail 24 présente deux pistes de roulement verticales 78 disposées en vis-à-vis.

Le chariot 26 comprend une broche 80 s'étendant en saillie à l'intérieur du rail 24 par une ouverture inférieure, et portant un galet 82 monté sur la broche 80 à rotation autour d'une axe vertical V3, et susceptible de venir en appui sélectivement sur l'une des pistes 78 pour guider transversalement la porte 8.

Les rails 20 et 24 sont rectilignes, ce qui permet notamment de prévoir un chariot 22 comprenant deux galets 66 espacés le long du rail 20.

Les deux galets 66 espacés assurent un appui du chariot 22 sur le rail 20 en deux points distants le long du rail 20, ce qui, compte tenu du guidage latéral de chaque galet 66 dans le rail 20, améliorent le guidage latéral du chariot 22 par rapport au rail 20. Le jeu latéral est quasiment inexistant. Il n'est pas nécessaire de prévoir des galets supplémentaires de guidage latéral.

En variante, le rail de l'ensemble 10 présente une section similaire à celle du rail 20, avec une piste de roulement inférieure plane. Ainsi, lorsque la porte 8 est en début d'ouverture ou en fin de fermeture, le galet 32 est en appui sur une piste de roulement plane, et le jeu latéral du galet 32 est augmenté, ce qui facilite le guidage de la partie avant de la porte 8 lors de son mouvement de déhanchement.

Cette variante permet de redonner du jeu latéral qui peut être nécessaire à la fermeture. Par exemple pour ne pas être hyperstatique avec les éléments de centrage.

Dans une variante alternative ou optionnelle, le rail de l'ensemble 12 présente une section similaire à celle du rail 16.

Pour assurer le mouvement de déhanchement de la partie arrière de la porte 8, les chariots 22 et 26 sont montés sur un bras de déhanchement 84.

Le bras 84 comprend une bielle inférieure 86 et une bielle supérieure 88 ayant des entraxes sensiblement égaux, et montées pivotantes sur la structure 4 autour d'un axe vertical V4 commun, et liées en rotation par un montant 90.

Les entraxes sont en variante différents pour permettre à la porte d'avoir une position porte ouverte inclinée par rapport à la situation fermée. Ceci permet par exemple d'éloigner le haut de la porte 8 de la tête de l'utilisateur.

Le chariot 22 est monté à rotation autour d'un axe vertical V5, sensiblement coaxial à l'axe V3, sur la bielle 86 du côté opposé à la structure 4, et la broche 80 est montée sur la bielle 88 du côté opposé à la structure 4.

Le mouvement de déhanchement est provoqué par la rotation du bras 84 autour de l'axe V4, entraînant un décalage des chariots 22, 26 et de la partie arrière de la porte 8 vers l'extérieur du véhicule 2.

Le véhicule 2 comprend un dispositif de guidage de la porte 8 lors de son mouvement de déhanchement, comprenant une branche 92 s'étendant horizontalement à partir du montant 90, et portant une broche 94 prolongeant la branche 92 verticalement vers le bas et portant un galet 96 monté à rotation sur la broche 94 autour d'un axe vertical V6, et une rainure 98 ménagée sur une plaque horizontale 100 solidaire de la porte 8, et destinée à recevoir le galet 96. L'axe V6 est décalé par rapport aux axes V3 et V5.

Un ressort de rappel 99 est interposé entre la structure 4 et le bras 84.

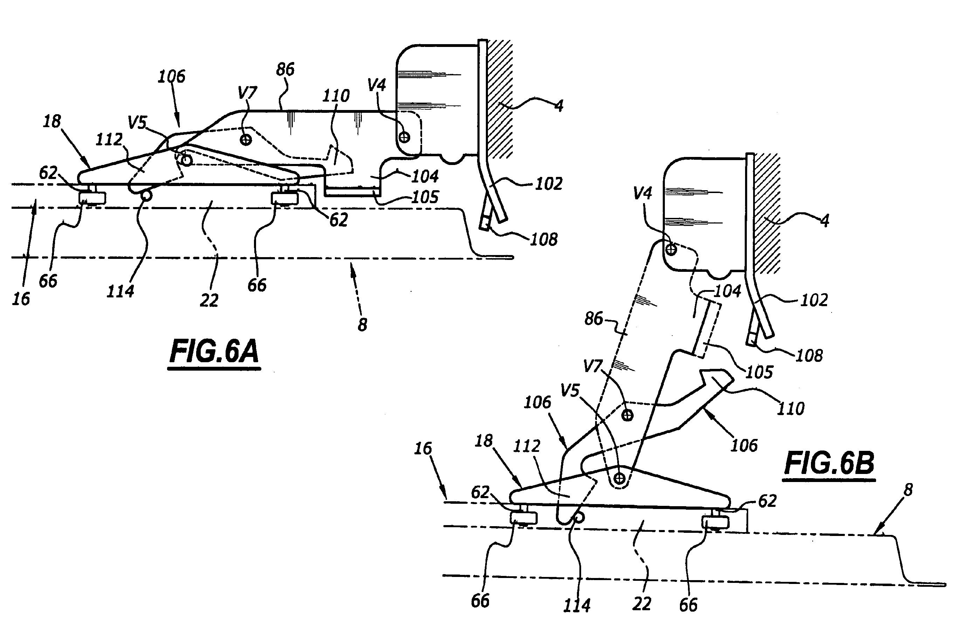

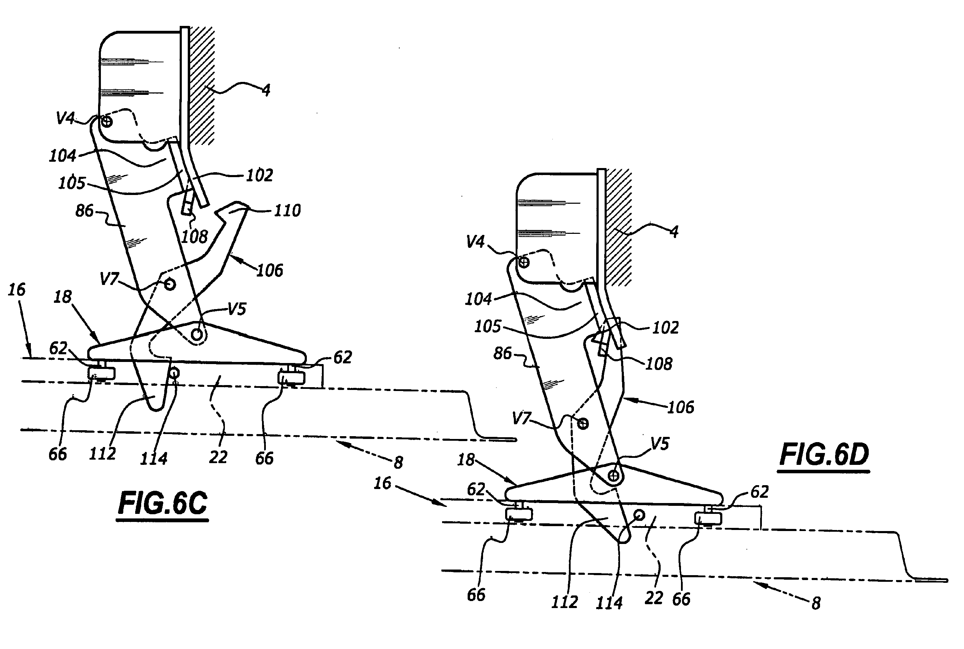

Comme illustré sur les figures 6A à 6D, le bras 84 est mobile entre une position rabattue (figure 6A) correspondant à la fermeture de la porte 8, dans laquelle les bielles 88 et 86 sont rabattues le long de la structure 4, et une position déployée correspondant à une position ouverte de la porte 8, dans laquelle les bielles 88 et 86 s'étendent vers l'extérieur de la structure 4 (figure 6D).

Le ressort 99 (figure 5) assiste la rotation du bras 84 et rattrape les jeux éventuels du bras 84 après la rotation, en position déployée (figure 6D).

Le bras 84 comprend un dispositif débrayable d'immobilisation du bras 84 en position déployée (figure 6D).

Le dispositif d'immobilisation comprend une butée angulaire 102 solidaire de la structure 4, limitant le mouvement du bras 84 à l'ouverture, et contre laquelle est destinée à venir en appui une butée complémentaire 104 solidaire du bras 86. Le ressort 99 sollicite le bras 84 en appui contre la butée 102. De préférence, une des butées 102, 104, par exemple la butée 104, est munie d'un patin élastique 105 permettant un accostage doux entre les butées 102 et 104.

Le dispositif d'immobilisation comprend également un cliquet 106 monté sur la bielle 86 et destiné à s'engager avec un doigt 108 fixe par rapport à la structure 4 pour interdire le rabattement du bras 84 à partir de la position déployée. Le doigt 108 est situé sous la butée 102.

Le cliquet 106 présente une forme allongée et est monté à rotation autour d'un axe vertical V7 sur la bielle 86. Une portion d'extrémité 110 du cliquet 106 située d'un côté de l'axe V7 constitue un crochet et une portion d'extrémité 112 située du côté opposé de l'axe V7 constitue un talon d'appui.

La porte 8 porte à hauteur du cliquet 106 un organe de déverrouillage 114 destiné à être en appui sur la talon 112 pour contrôler la position du cliquet 106 en s'opposant à l'action d'un ressort de rappel 118 (figure 3) interposé entre le cliquet 106 et la bielle 86.

Lorsque la porte 8 est fermée (figure 6A), la bielle 86 s'étend le long de la structure 4 et, le cliquet 106, retenu par l'organe 114 s'étend sensiblement parallèlement à la bielle 86, le talon 112 étant dirigé vers l'avant, et le crochet 110 vers l'arrière.

Lors du mouvement de déhanchement, la cinématique de la porte 8, commandées par les ensembles 10, 12, 14, est telle que la porte 8 se déplace transversalement dans des plans successifs sensiblement parallèles (figure 6A à 6D).

Au début de l'ouverture (figure 6B), la bielle 86 pivote autour de l'axe V4. L'organe 114 se déplace faiblement par rapport au cliquet 106, qui pivote faiblement autour de l'axe V7.

Lorsque la rotation du bras 86 se poursuit (figure 6C), la butée 104 vient en appui sur la butée 102. Dans cette position, le mouvement de déhanchement est terminé et la porte 8 peut coulisser vers l'arrière. L'organe 114 retient encore le cliquet 106.

Dès que la porte 8 coulisse vers l'arrière (figure 6D), l'organe 114 se déplace conjointement à la porte 8 par rapport à la bielle 89, et libère le cliquet 106 dont le crochet 110 vient en prise avec le doigt 108 sous l'action du ressort 118 (figure 3) et empêche le bras 84 de se rabattre, lors d'une inversion du sens de manoeuvre de la porte 8.

Le doigt 108 se situe à l'arrière d'un plan passant par les axes V4 et V7 dans le sens de déplacement le bras 84 vers la position rabattue. Par conséquent, le cliquet 106 en position verrouillée est sollicité en traction.

Lors de la fermeture de la porte 8 (figures 6D à 6A), la porte 8 s'avance jusqu'à ce que l'organe 114 appuie sur le talon 112, et fasse pivoter le cliquet 106 qui se dégage du doigt 108, ce qui déverrouille le dispositif d'immobilisation et permet au bras 84 de se rabattre contre la structure 4 jusqu'à la fermeture de la porte 8. Les raideurs des ressorts 99 et 118 sont calculées pour que le moment qui agit sur le cliquet 106 soit plus petit que le moment qui agit sur le bras 84, afin que le cliquet 106 se débraye sans effort alors que le bras 84 reste en appui sur la butée 102.

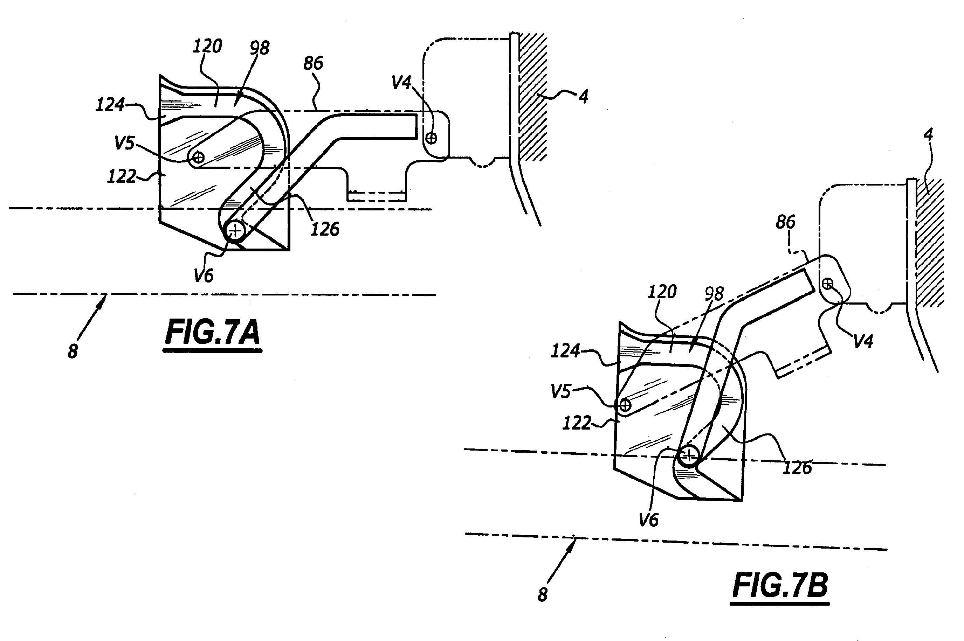

Les figures 7A à 7D illustrent la coopération du bras 84 avec la plaque 100 dans des positions correspondant à celles des figures 6A à 6D respectivement. La bielle 86 est représentée en traits mixtes afin d'indiquer la position de la porte 8 relativement à la structure 4.

La rainure 98 comprend un tronçon d'entrée sensiblement rectiligne 120 s'étendant parallèlement au plan général de la porte 8, c'est-à-dire suivant un axe longitudinal du véhicule 2.

Le tronçon rectiligne 120 débouche sur un bord avant 122 de la plaque 100 par une entrée évasée 124. Du côté opposé à l'entrée 124, le tronçon rectiligne 120 est prolongé par un tronçon courbe 126 s'étendant suivant une direction générale transversale, c'est-à-dire perpendiculairement au tronçon 120, vers l'extérieur de la structure 4.

Le tronçon 126 est sinueux et comprend successivement de son extrémité du côté du tronçon 120 vers son extrémité opposée, une portion s'étendant obliquement vers l'arrière, une portion s'étendant obliquement vers l'avant et une portion s'étendant obliquement vers l'arrière.

Lorsque la porte 8 est en position fermée (figure 7A), le galet 94 se situe au fond du tronçon 126. Dans cette position, le galet 94 est décalé vers l'extérieur du véhicule par rapport à un plan vertical passant par l'axe V4 et l'axe V5.

Lorsque la porte 8 est sollicitée longitudinalement vers l'arrière, le galet 96 est sollicité contre une paroi latérale de la rainure 98, et la sollicitation longitudinale est convertie par le galet 94 et la plaque 100 en une sollicitation transversale dirigée vers l'extérieur.

Le décalage du galet 94 par rapport aux axes V5 et V4 assure que le bras 84 pivote vers l'extérieur de la structure 4 et non vers l'intérieur.

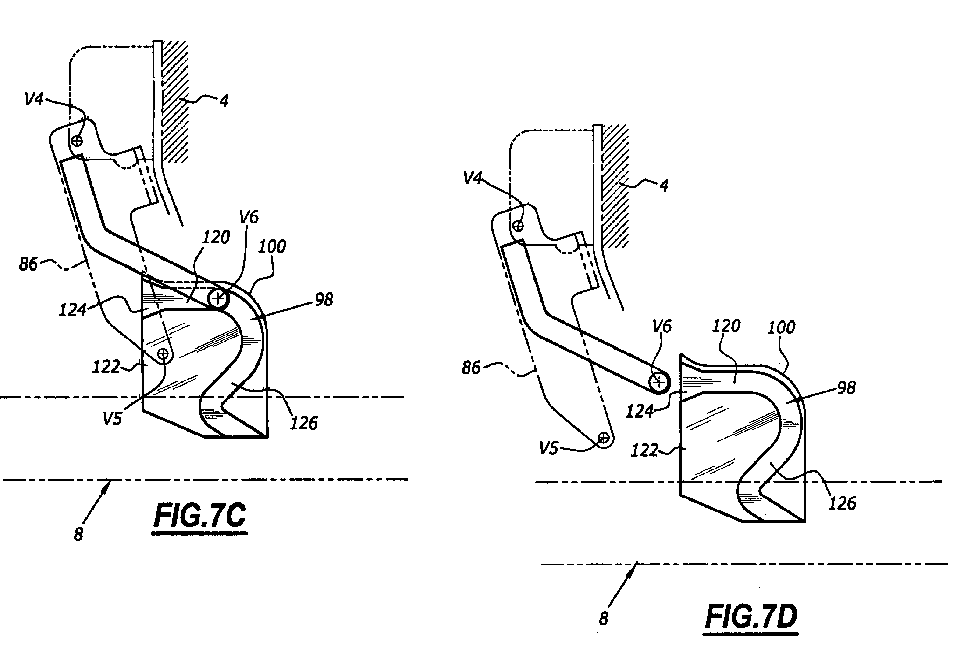

Lorsque le déplacement de déhanchement de la porte 8 est terminé (figure 7C), le galet 94 a atteint le tronçon 120, et la porte 8 est libre de se déplacer vers l'arrière, auquel cas le galet 94 sort de la rainure 98 par l'entrée 124.

Le mouvement de fermeture se fait suivant une séquence inverse (figure 7D à 7A) : la platine 100 s'avance vers l'avant jusqu'à ce que le galet 96 pénètre dans la rainure 98 (figure 7C), le galet 94 chemine le long du tronçon 120, de façon à assurer l'engagement entre le galet 96 et la rainure 98, puis le long du tronçon 126 (figure 7B), de sorte que la porte 8 est guidée selon un mouvement transversal vers l'intérieur de la structure 4, vers sa position fermée (figure 7A).

Le trajet de la rainure 98 est étudié pour guider le mouvement relatif de la porte 8 et du bras 84, en particulier lorsque le cliquet 106 est dégagé du doigt 108 et que le bras 84 est susceptible de se rabattre contre la structure 4. Ainsi, lors de l'ouverture, le cliquet 106 s'engage avec le doigt 108 avant que le galet 96 n'échapper de la rainure 98, et lors de la fermeture, le cliquet 106 se dégage du doigt 108 après que le galet 96 soit engagé dans la rainure 98.

Le trajet de la rainure 98 dépend du mouvement souhaité pour la porte 8, et également du guidage de la partie avant de la porte 8.

En variante, le tronçon 126 pourrait présenter un profil différent, par exemple un profil rectiligne transversal ou oblique, vers l'avant ou l'arrière.

Les dimensions de la plaque 100 sont limitées pour éviter un accroissement du poids de la porte 8. Ainsi, lorsque le cliquet 106 est en prise avec le doigt 108 et que le bras 84 est immobilisé, le guidage obtenu par le galet 98 n'est plus indispensable. La rainure 98 s'interrompt et le galet 96 échappe de la rainure 98 par l'entrée 124.

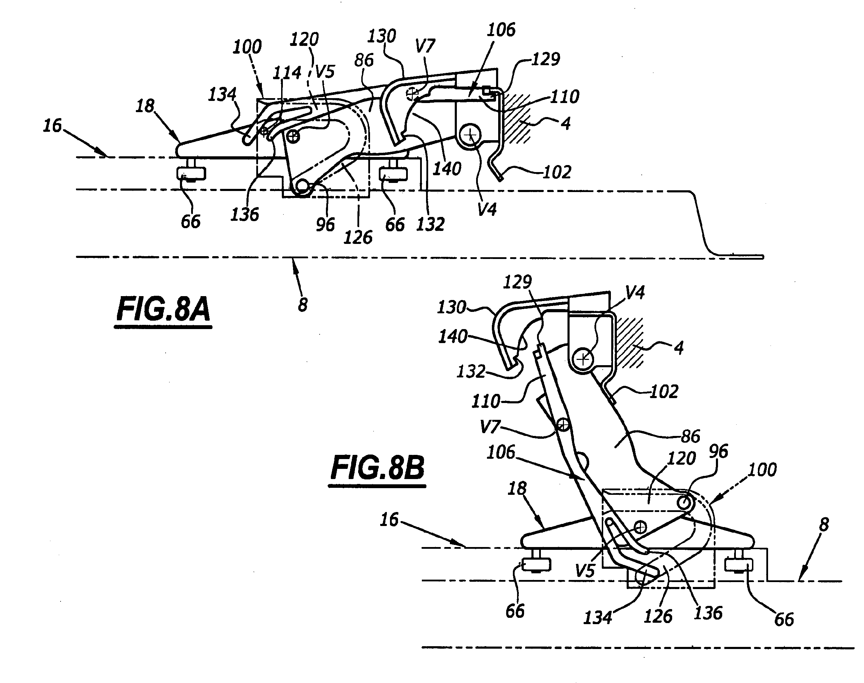

Une variante illustrée sur les figures 8A à 8B, où les références aux éléments semblables ont été reprises, permet d'améliorer la compacité du dispositif de déhanchement.

Dans cette variante, le galet 96 est porté par la bielle 86, la rainure 98 est ménagée sur une surface inférieure de la plaque 100 représentée en traits mixtes pour des raisons de clarté, et l'organe 114 est porté par la plaque 100. Le tronçon 126 de la plaque 100 s'étend sensiblement obliquement transversalement vers l'extérieur et vers l'avant de la structure 4

La portion d'extrémité 110 du cliquet 106 est munie d'une dent de verrouillage 129 destinée à s'engager en position déployée de la bielle 86 dans un cran 132 d'une butée 130 fixée sur la structure 4. La butée 130 s'étend à partir de la structure 4 vers l'avant de l'axe V4.

A son extrémité opposée, le cliquet 106 est muni d'une fourche à deux branches 134, 136, destinée à coopérer avec l'organe 114.

En fonctionnement et comme illustré sur les figures 8A à 8D, l'organe 114 s'engage entre les branches 132, 134 pour contrôler le mouvement de rotation du cliquet 106 par rapport à la bielle 86.

Lorsque la porte 8 est en position fermée (figure 8A), l'organe 114 est engagé entre les branches 134, 136 et le cliquet 106 est maintenu aligné avec la bielle 86, la fourche étant dirigée vers l'avant. Le galet 96 est engagé au fond du tronçon 126.

Lors du déplacement de déhanchement de la porte 8 (figure 8B), la bielle 86 pivote autour de l'axe V4 jusqu'à être en appui contre la butée 102. Le cliquet 106 est retenu par l'organe 114 et n'est pas engagé avec le cran 132.

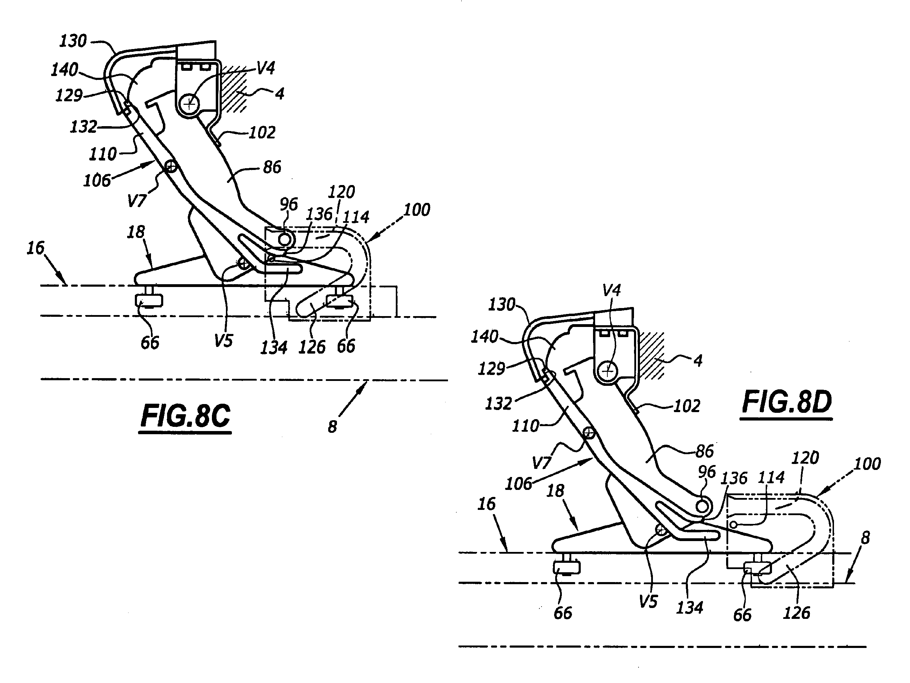

Lorsque la porte 8 se déplace vers l'arrière (figure 8C), le galet 96 circule dans le tronçon 120, et l'organe 114 sort de la fourche 134, 136. Ce faisant, le cliquet 106 pivote autour de l'axe V7 sous l'action de son ressort de rappel (non représenté), et la dent 129 s'engage dans le cran 132. Le cliquet 106 est verrouillé.

Dans la position déhanchée (figure 8C), le cran 132 est disposé à l'avant d'un plan passant par l'axe V5 et l'axe V7. Un mouvement de retour de la bielle 86 vers sa position rabattue provoque un rapprochement de l'axe V7 vers le cran 132. Le cliquet 106 en position verrouillée s'arc-boute entre le cran 132 et la bielle 86.

Lors de la fermeture de la porte 8 (figures 8D à 8A), l'organe 114 s'engage contre la branche 134 et déverrouille le cliquet 106, autorisant à nouveau le déplacement de la bielle 86 vers sa position rabattue.

La butée 130 est munie d'un dégagement 140 permettant le déplacement de la dent du cliquet 106 lors du rabattement de la bielle 86 le long de la structure 4.

## Revendications

1. Véhicule automobile, du type comprenant une structure (4) possédant une ouverture (6), une porte latérale (8) adaptée pour fermer l'ouverture (6), la porte (8) étant montée coulissante par rapport à la structure (4) par l'intermédiaire d'au moins un ensemble de support et de guidage comprenant un rail solidaire de la porte (8) et un chariot destiné à coulisser le long du rail, le chariot étant monté sur un bras de déhanchement monté pivotant autour d'un axe (V4) sur la structure (4) et dont le déplacement entre une position rabattue le long de la structure et une position déployée vers l'extérieur de la structure (4) en début d'ouverture de la porte (8) permet de déplacer la porte (8) vers l'extérieur de la structure (4) en vue de son coulissement, ledit véhicule comprenant un dispositif de guidage du mouvement de la porte (8) lors du pivotement du bras (84), comprenant un élément (96) lié au bras (84), et une rainure (98) ménagée sur la porte (8) et s'étendant dans un plan perpendiculaire à l'axe de pivotement du bras (84), l'élément (96) se déplaçant le long de la rainure (98) lorsque le bras (84) se déplace entre sa position rabattue et sa position déployée,
**caractérisé en ce que** l'élément est un galet (96), et **en ce que** la rainure (98) comprend au moins un tronçon d'entrée (120) parallèle à la direction de coulissement de la porte (8), et un tronçon de déhanchement (126) prolongeant le tronçon d'entrée (120) et s'étendant dans une direction générale transversale à la direction de coulissement de la porte (8).

2. Véhicule selon la revendication 1, **caractérisé en ce que** l'ensemble de guidage et de support (12) a son chariot (22) monté à rotation sur le bras de déhanchement (84) autour d'un axe (V5) parallèle à l'axe de rotation (V4) du bras de déhanchement par rapport à la structure (4).

3. Véhicule selon la revendication 2, **caractérisé en ce que**, en position fermée de la porte (8), le galet (96) est décalé vers l'extérieur de la structure (4) par rapport à un plan passant par l'axe de rotation (V4) du bras de déhanchement (84) par rapport à la structure (4) et par l'axe de rotation (V5) du chariot (22) par rapport au bras de déhanchement (84).

4. Véhicule automobile selon l'une quelconque des revendications précédentes, **caractérisé en ce qu'**il comprend un dispositif d'immobilisation (102, 104 106, 108) débrayable du bras de déhanchement (84) en position déployée, le galet (96) s'engageant dans la rainure (98) lorsque le dispositif d'immobilisation est débrayé et que le bras (84) pivote, et se dégageant de la rainure (98) au cours du coulissement de la porte (8), une fois que le dispositif d'immobilisation (102, 104, 106, 108) est actif.

5. Véhicule selon la revendication 4, **caractérisé en ce que** le dispositif d'immobilisation comprend une butée (102) de limitation de la rotation du bras de déhanchement (84) à l'ouverture.

6. Véhicule selon la revendication 5, **caractérisé en ce que** le dispositif d'immobilisation comprend une butée de cliquet (108, 130) solidaire de la structure (4), un cliquet (106) monté à rotation sur le bras de déhanchement (84), comprenant une première extrémité (110, 129) constituant un embout de blocage et une deuxième extrémité constituant un talon d'appui (112, 134, 136) de part et d'autre de l'axe de rotation du cliquet (106), et un organe de libération (114) solidaire de la porte (8), de façon que, en position déployée du bras de déhanchement (84), l'embout de blocage (110, 129) est en prise avec la butée (108, 130) pour empêcher un retour du bras de déhanchement vers la position rabattue, et que lors de la fermeture de la porte, l'organe de libération (114) appui contre le talon d'appui (112, 134, 136) pour dégager le cliquet (106) de la butée et libérer le bras de déhanchement (84) en rotation vers sa position rabattue.

7. Véhicule selon la revendication 6, **caractérisé en ce que** le cliquet (106) en position verrouillée, c'est à dire, avec l'embout de blocage (110, 129) en prise avec la butée (108, 130), est sollicité en traction par un mouvement du bras de déhanchement (84) de la position déployée vers la position rabattue.

8. Véhicule selon la revendication 6, **caractérisé en ce que** le cliquet (106) en position verrouillée, c'est à dire, avec l'embout de blocage (110, 129) en prise avec la butée (108, 130), est arc-bouté entre le bras de déhanchement (84) et la butée de cliquet (130).

## Claims

1. Motor vehicle, of the type comprising a structure (4) having an opening (6), a side door (8) designed for closing the opening (6), the door being mounted so as to slide relative to the structure (4) by means of at least one support and guiding assembly comprising a track joined to the door (8) and a carriage designed to slide along the track, the chariot being mounted on a swivelling arm mounted so as to pivot about an axis (V4) on the structure (4) and the movement of which between a closed position along the structure and an opened-out position opened outwards from the structure (4) at the start of opening the door (8) makes it possible to move the door (8) outwards from the structure (4) with a view to its sliding, said vehicle comprising a device for guiding the movement of the door (8) while the arm (84) is pivoting, comprising an element (96) connected to the arm (84) and a groove (98) formed on the door (8) and extending in a plane perpendicular to the swivel axis of the arm (84), the element (96) moving along the groove (98) while the arm (84) moves between its closed position and its opened-out position,
**characterized in that** the element is a roller (96) and **in that** the groove (98) comprises at least one entry section (120) parallel to the direction of the sliding of the door (8) and a swivel section (126) in line with the entry section (120) and extending in a direction generally transverse to the direction of the sliding of the door (8).

2. Vehicle according to Claim 1, **characterized in that** the guiding and support assembly (12) has its carriage (22) mounted so as to rotate on the swivelling arm (84) about an axis (V5) parallel to the axis of rotation (V4) of the swivelling arm relative to the structure (4).

3. Vehicle according to Claim 2, **characterized in that** in the closed position of the door (8) the roller (96) is shifted outwards from the structure (4) relative to a plane passing through the axis of rotation (V4) of the swivelling arm (84) relative to the structure (4) at through the axis of rotation (V5) of the carriage (22) relative to the swivelling arm (84).

4. Motor vehicle according to any one of the preceding claims, **characterized in that** it comprises an immobilization device (102, 104, 106, 108) that can be disengaged from the swivelling arm (84) in the opened-out position, the roller (96) entering the groove (98) when the immobilization device is disengaged and when the arm (84) pivots, and being removed from the groove (98) when the door (8) is sliding, once the immobilization device (102, 104, 106, 108) is active.

5. Vehicle according to Claim 4, **characterized in that** the immobilization device comprises a stop (102) for limiting the rotation of the swivelling arm (84) on opening.

6. Vehicle according to Claim 5, **characterized in that** the immobilization device comprises a catch stop (108, 130) joined to the structure (4), a catch (106) mounted so as to rotate on the swivelling arm (84), comprising a first end (110, 129) constituting a blocking tip and a second end constituting a bearing heel (112, 134, 136) on each side of the axis of rotation of the catch (106), and a release member (114) joined to the door (8) in such a way that, in the opened-out position of the swivelling arm (84), the blocking tip (110, 129) engages with the stop (108, 130) to prevent the swivelling arm returning towards the closed position and that, when closing the door, the release member (114) pushes against the bearing heel (112, 134, 136) in order to release the roller (106) from the stop and release the swivelling arm (84) to rotate towards its closed position.

7. Vehicle according to Claim 6, **characterized in that** the catch (106) in the locked position, i.e. with the blocking tip (110, 129) engaged with the stop (108, 130), is driven by being pulled by a movement of the swivelling arm (84) from the opened-out position to the closed position.

8. Vehicle according to Claim 6, **characterized in that** the catch (106) in the locked position, i.e. with the blocking tip (110, 129) engaged with the stop (108, 130), is buttressed between the swivelling arm (84) and the catch stop (130).

## Patentansprüche

1. Kraftfahrzeug jener Art, die eine eine Öffnung (6) aufweisende Struktur (4) und eine Seitentür (8), die zum Schließen der Öffnung (6) ausgeführt ist, umfasst, wobei die Tür (8) bezüglich der Struktur (4) mittels mindestens einer Stütz- und Führungsanordnung verschiebbar angebracht ist, die eine fest mit der Tür (8) verbundene Schiene und einen Schlitten, der entlang der Schiene gleiten soll, umfasst, wobei der Schlitten an einem Versetzungsarm angebracht ist, der schwenkbar um eine Achse (V4) an der Struktur (4) angebracht ist und dessen Verschiebung zwischen einer eingeklappten Position entlang der Struktur und einer nach außerhalb der Struktur (4) ausgeklappten Position zu Beginn des Öffnens der Tür (8) ein Verschieben der Tür (8) nach außerhalb der Struktur (4) zwecks Gleitens derselben gestattet, wobei das Fahrzeug eine Vorrichtung zur Führung der Bewegung der Tür (8) beim Schwenken des Arms (84) aufweist, die ein mit dem Arm (84) verbundenes Element (96) und eine an der Tür (8) ausgebildete Nut (98) umfasst, die sich in einer senkrecht zur Schwenkachse des Arms (84) verlaufenden Ebene erstreckt, wobei sich das Element (96) entlang der Nut (98) verschiebt, wenn sich der Arm (84) zwischen seiner eingeklappten Position und seiner ausgeklappten Position verschiebt,
**dadurch gekennzeichnet, dass** das Element eine Rolle (96) ist und dass die Nut (98) mindestens einen Einlassabschnitt (120), der sich parallel zur Gleitrichtung der Tür (8) erstreckt, und einen Versetzungsabschnitt (126), der den Einlassabschnitt (120) verlängert und sich in einer allgemein quer zur Gleitrichtung der Tür (8) verlaufenden Richtung erstreckt, umfasst.

2. Fahrzeug nach Anspruch 1, **dadurch gekennzeichnet, dass** der Schlitten (22) der Führungs- und Stützanordnung (12) drehbar am Versetzungsarm (84) um eine Achse (V5), die parallel zur Drehachse (V4) des Versetzungsarms bezüglich der Struktur (4) verläuft, angebracht ist.

3. Fahrzeug nach Anspruch 2, **dadurch gekennzeichnet, dass** in der geschlossenen Position der Tür (8) die Rolle (96) nach außerhalb der Struktur (4) bezüglich einer die Drehachse (V4) des Versetzungsarms (84) bezüglich der Struktur (4) und die Drehachse (V5) des Schlittens (22) bezüglich des Versetzungsarms (84) durchquerenden Ebene versetzt ist.

4. Kraftfahrzeug nach einem der vorhergehenden Ansprüche, **dadurch gekennzeichnet, dass** es eine Festlegungsvorrichtung (102, 104, 106, 108) aufweist, die in der ausgeklappten Position von dem Versetzungsarm (64) ausgerückt werden kann, wobei die Rolle (96) in die Nut (98) eingreift, wenn die Festlegungsvorrichtung ausgerückt ist, und dass der Arm (84) während des Gleitens der Tür (8) schwenkt und außer Eingriff von der Nut (98) gelangt, wenn die Festlegungsvorrichtung (102, 104, 106, 108) aktiv ist.

5. Fahrzeug nach Anspruch 4, **dadurch gekennzeichnet, dass** die Festlegungsvorrichtung einen Anschlag (102) zur Begrenzung der Drehung des Versetzungsarms (84) beim Öffnen umfasst.

6. Fahrzeug nach Anspruch 5, **dadurch gekennzeichnet, dass** die Festlegungsvorrichtung einen Klinkenanschlag (108, 130), der fest mit der Struktur (4) verbunden ist, eine drehbar am Versetzungsarm (84) angebrachte Klinke (106), die ein erstes Ende (110, 129), das ein Sperrenstück bildet, und ein zweites Ende, das einen Stützansatz (112, 134, 136) auf beiden Seiten der Drehachse der Klinke (106) bildet, aufweist, und ein Freigabeglied (114), das fest mit der Tür (8) verbunden ist, aufweist, so dass in der ausgeklappten Position des Versetzungsarms (84) das Sperrendstück (110, 129) mit dem Anschlag (108, 130) in Eingriff steht, um eine Rückkehr des Versetzungsarms in die eingeklappte Position zu verhindern, und dass beim Schließen der Tür das Freigabeglied (114) am Stützabschnitt (112, 134, 136) anliegt, um die Klinke (106) des Anschlags auszurücken und den Versetzungsarm (84) in Drehung in die eingeklappte Position zu versetzen.

7. Fahrzeug nach Anspruch 6, **dadurch gekennzeichnet, dass** die Klinke (106) in der verriegelten Position, das heißt mit dem Sperrendstück (110, 129) in Eingriff mit dem Anschlag (108, 130), durch eine Bewegung des Versetzungsarms (84) aus der ausgeklappten in die eingeklappte Position zugbeansprucht wird.

8. Fahrzeug nach Anspruch 6, **dadurch gekennzeichnet, dass** die Klinke (106) in der verriegelten Position, das heißt mit dem Sperrendstück (110, 129) in Eingriff mit dem Anschlag (108, 130), zwischen dem Versetzungsarm (84) und dem Klinkenanschlag (130) verstrebt ist.
